# EUROPEAN PATENT APPLICATION

(11) **EP 2 533 327 A1**
(43) Date of publication of application: **12.12.2012**
(21) Application number: 11004717.2
(22) Date of filing: 09.06.2011
(51) Int. Cl.: H01M 2/30, H01M 4/66, H01M 10/0525

(54) **Galvanic cell connection lug, calvanic cell, battery and process for manufacturing the connetcion lug**

(71) Applicant: BRUSA Elektronik AG, 9466 Sennwald (CH)
(72) Inventor: Krause, Axel, 9650 Nesslau (CH)
(74) Representative: Patentbüro Paul Rosenich AG

(57) **Abstract**

The present invention relates to a galvanic cell connection lug (2) characterized in that it comprises a body made of aluminium or aluminium alloys and an electro-conductive metal coating on the surface of the body. Also disclosed is a galvanic cell (1) comprising said connection lug (2), a battery comprising at least one of said galvanic cells (1), as well as a process for manufacturing the said connection lug (2) characterized in that it comprises the following steps: a) degreasing; b) alkaline etching; c) acid etching; d) fluoride etching; g) repeating steps b) and c) at least once; h) zincate coating; i) electroplating a metal coating.

## Description

### Field of the Invention

The present Invention relates to galvanic cell connection lug characterized in that it comprises a body made of aluminium or aluminium alloys and an electro-conductive metal coating on the surface of the body, galvanic cell comprising said connection lug, a battery comprising at least one of said galvanic cells, and to a process for manufacturing said connection lug.

### Background

Nowadays, electrical and electronic devices which may be operated independently of a power supply are widely used in industrial and consumer applications. Powerful devices and the desire for a long operating time demand efficient batteries. These should, of course, be also compact and light but nevertheless have high energy content. In particular, these requirements are applicable to electric vehicles. Battery- and accumulator-operated electric vehicles are no longer inconceivable today. In fact, they are becoming more and more attractive with the advancement of new battery technology, especially the lithium-ion battery technology, yielding higher power and energy density batteries, and higher oil prices.

A battery is a package of one or more galvanic cells used for the production and storage of electric energy by chemical means. A galvanic cell consists of at least two half cells, a reduction cell and an oxidation cell. Chemical reactions in the two half cells provide the energy for the galvanic cell operations.

In high power and energy density batteries comprising a plurality of galvanio cells, each cell can be provided with connections lugs, which allow the inter-connection of cells, eventually, through a cell connecting element, e.g. a terminal.

The connection lugs are good current and heat conductors. They are typically constructed of copper or aluminium. Aluminium is generally preferred since its ability to conduct electricity is approximately 62% of that of copper, but it weights less than 1/3. This means that it conducts about twice as much electricity as copper of the same weight Moreover, it is a very economical material.

Unfortunately, connection lugs constructed from aluminium exhibit high electrical resistance, which, in turn, results in a loss of good electrical connection and reduced power, causing many reliability concerns and reducing service life of a battery.

Such losses are generally attributed to the fact that aluminium surface includes a native oxide layer which acts as an insulator, increasing interfacial impedance, and thus severely limits electrical conductivity.

Besides oxidation, aluminium can also undergo galvanic corrosion, which represents a further major cause of long-term deterioration in electrical connections. In galvanic cells where two dissimilar metals are used, e.g. aluminium and cooper, aluminium becomes the anode in the galvanic cell that is formed when in contact with copper, and is therefore the material that undergoes the corrosion.

In addition, external environmental conditions also tend to increase corrosion. In a vehicle, for example, external conditions of moisture, road and sea salt, and vehicle fluids, combine with the inherent voltage conditions to cause rapid electro-voltaic corrosion of the battery electrodes and terminals.

Thus, an important point in achieving optimum efficiency from a battery and a prolonged operating time is by preventing corrosion.

### Summary of the Invention

The problem to be solved by the present invention is to provide a galvanic cell connection lug with substantially increased corrosion resistance, and substantially reduced interfacial impedance.

The solution is based on that the present inventors have identified that by coating the aluminium or aluminium alloy surface of a galvanic cell connection lug with an electro-conductive metal, such as silver, its corrosion resistance Is significantly Increased and the interfacial impedance reduced.

Accordingly, a first aspect of the invention relates to a galvanic cell connection lug characterized in that it comprises a body made of aluminium or aluminium alloys and an electro-conductive metal coating on the surface of the body.

In a second aspect the invention relates to a galvanic cell comprising a galvanic cell connection lug according to claims 1 to 4.

In a third aspect the invention relates to a battery comprising at least one galvanic cell according to claim 6.

In a fourth aspect the invention relates to a process for manufacturing a galvanic cell connection lug according to claims 1 to 4 characterized in that it comprises the following steps:
a) degreasing the surface of the connection lug;
b) alkaline etching the surface of the connection lug;
c) acid etching the surface of the connection lug;
d) fluoride etching the surface of the connection lug;
g) repeating steps b) and c) at least once;
h) forming a zincate coating on the surface of the connection lug;
i) electroplating a metal coating.

By alternating between alkaline and acid etching, as described herein, it is possible to achieve a uniform etching process on the aluminium or aluminium alloy surface. Moreover, impurities and residues from the rolling process, as well as silicone residues and heavy metals, such as copper, which are released and significantly interfere with the subsequent coating process, are effectively removed by performing steps b) to d). After removal of the impurities and residues, it is possible to remove the remaining oxide layer by simple etching processes, i.e., by repeating steps b) and c). Therefore, a further advantage of this process is that no additional steps with halogen solutions, such as hydrofluoric acid, are necessary. This makes the process according to the present invention more gentle regarding treatment of aluminium or aluminium alloy surfaces and more ecological.

### Drawings

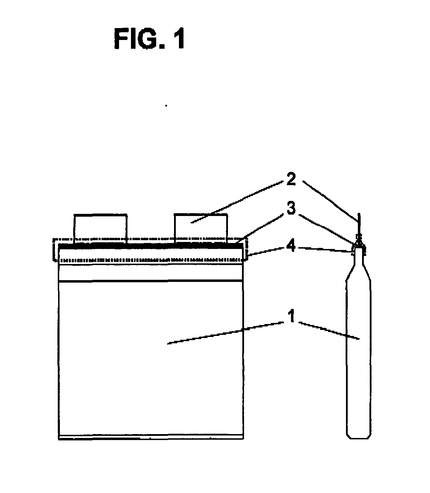

Fig. 1 - is a schematic representation of galvanic cell (1) provided with terminal connection lugs 2, a seal 3 and an adhesive tape 4.

### Detailed description of the Invention

It is advantageous if lithium-ion cells are provided as the galvanic cells. The lithium-ion battery is characterized by a high power density, Is thermally stable and Is not subject to a memory effect. Within the scope of the present invention, lithium-ion cells are also understood to include further developments such as lithium-polymer cells.

The battery is preferably of high power and energy density comprising a plurality of galvanic cells.

In principle the aluminium or aluminium alloy connection lugs of the present invention may have any shape. Advantageously they have a flag-like shape with circular holes arranged along the longitudinal axis of the flag-like connection lug.

Advantageously, the connection lug according to the invention further comprises a zincate coating between the body and the electro-conductive metal coating.

In addition, It Is also advantageous that the connection lug further comprises a nickel coating between the zincate coating and the electro-conductive metal coating.

Preferably, the electro-conductive metal coating Is a silver coating, with a thickness from 5 to 10 µm.

Advantageously, the aluminium or aluminium alloy connection lugs are metal plated when already assembled to the galvanic cell. It Is possible to effectively metal plate aluminium or aluminium alloy connection lugs of at least six galvanic cells simultaneously by correctly adjusting the process parameters.
It is, however, possible to metal plate the connection lugs before they are assembled to the galvanic cell.

According to the process of the present invention the aluminium or aluminium alloy surface of the connection lugs is submitted to degreasing, etching and plating steps, which are performed in succession with intermediate water rinsing steps.

Thus, the aluminium or aluminium alloy surface is firstly degreased for removal of any traces of oil, grease or solid dirt particles. The aluminium or aluminium alloy surface Is degreased by emersion in a heated bath of a degreasing salt, like an alkali salt, for example an alkali hydroxide, such as sodium hydroxide, for a pre-determined time period. In a preferred embodiment, the aluminium or aluminium alloy surface is degreased for about 2 to 4 minutes at a temperature between 50-95°C, preferably between 55-75°C, and more preferably at 60°C, and pH between 7,5-8,5, preferably 8,0.

For the elimination of the oxide layer formed on the surface of aluminium or aluminium alloy, as well as residues resulting from the roiling process, e.g. silicon and heavy metals, such as copper, the aluminium or aluminium alloy surface of the connection lugs undergoes a series of etching treatments.

Accordingly, the aluminium or aluminium alloy connection lugs are first etched under alkaline conditions. In principle any convenient alkaline solution may be used. ln a preferred embodiment the alkaline etching step is performed at a temperature between 50-70°, preferably at 60°C, and pH between 7,5-11,0, preferably at pH 10,0, for about 2 minutes.

Subsequently, the aluminium or aluminium alloy connection lugs are etched under acidic conditions at pH < 5,5, preferably at pH 1,0, using a strong mineral acid, eventually, in combination with an acidifier. Preferably a solution of sulphuric acid and Acidal, pH 1,0 is used. The acid etching step is preferably performed at room temperature for about 1 to 2 minutes.

By alternating between alkaline and acid etching, as described herein, it is possible to achieve a uniform etching process on the aluminium surface.

In a third etching step for further removal of foreign residues (silicone and foreign metals), the aluminium or aluminium alloy surface is etched with a fluoride solution. Preferably this etching step is carried out in a solution comprising ammonium difluoride and nitric acid, pH 1,0, at room temperature for about 1 minute.

Comparing to hydrofluoric acid, a solution of ammonium difluoride and nitric acid is equally effective for removal of foreign residues, except that it is less toxic and dangerous than concentrated hydrofluoric acid commonly used. Additionally it provides gentler conditions for treating aluminium surfaces.

After performing this first series of etching steps for effective removal of impurities, silicon and heavy metals residues, and obtaining a uniform etched surface, a simple alkaline and acid etching process Is performed in order to remove the remaining oxide layer. The conditions under which these alkaline and acid etching steps are performed are the same as described above.

Subsequently, the aluminium or aluminium alloy surface of the connection lugs is coated with a zincate layer, In this step the aluminium or aluminium alloy lugs are dipped in a suitable zincate bath. In a preferred embodiment a solution of NaOH with added zinc, pH 10,0 is used. This step is performed at room temperature for about 1 minute.

Advantageously, the zincate coating step is carried out twice with an intermediate acid etching step.

The zincate process provides adherence before a first metal coating is applied. Through this chemical process zinc ions, as well as, copper and nickel ions, are deposited on the aluminium or aluminium alloy surface. The first deposition layer is, however, relatively coarse and is therefore partially removed by acid etching before a second deposition takes place. The crystalline structure becomes thereby much more refined and uniform, and the adhesion Is substantially improved.

Following pre-treatment the aluminium or aluminium alloy surface is in principle ready for metal electro-deposition.

However, in order to provide an additional protection against corrosion and abrasion the aluminium or aluminium alloy connection lug is advantageously pre-plated with nickel. In a preferred embodiment the nickel is electroplated on the aluminium or aluminium alloy surface using an electric current density between 0,3 and 1,0 A/dm² for about 8 to 12 minutes. Preferably, a nickel plating bath comprising nickel sulfate and nickel chloride, pH 8,0 is used.

Before proceeding with the final metal coating step, the aluminium or aluminium alloy surface of the connection lugs is advantageously cyanide pickled. This procedure allows effective removal of acid residues and is gentler towards the alkali wetted aluminium or aluminium alloy surface. Preferably, a solution of potassium cyanide, pH 10,0, is used. The cyanide pickling step is preferably carried out at room temperature for about 30 seconds.

A final metal is then plated onto the surface of the aluminium or aluminium alloy connection lugs by electro-deposition. In a preferred embodiment, silver is electroplated onto the aluminium or aluminium alloy surface of the connection lugs using an electric current density between 0,2 and 0,5 A/dm² for about 15 minutes. Preferably, a silver plating solution comprising potassium silver cyanide and potassium cyanide, pH 10,0 is used. The thickness of the silver coating achieved is, preferably, from 5 to 10 µm.

The aluminium or aluminium alloy connection lugs obtained according to the present invention have substantially increased corrosion resistance, and substantially reduced interfacial impedance, and the galvanic cells comprising such connection lugs show low impedance, good mechanical properties and good long-term stability.

### Example 1 - Silver electroplating aluminium connection lugs of a pack of six galvanic cells

As shown in Fig. 1 an adhesive tape 4 was used for protection of the connection lugs 2 of each galvanic cell 1.

Each galvanic cell 1 was then immersed for about 5 cm in a protective ink for protection from the subsequent degreasing, etching and plating baths. The protective ink is a strippable paint that can subsequently be easily removed.

After immersion protective ink, the galvanic cell 1 was dripped and the protective ink was allowed to dry for at least 8 hours at room temperature, in order to achieve an effective protection.

Following effective protection of the galvanic cell 1, any ink on the aluminium connection lug 2 was carefully removed and a pack of six galvanic cells was assembled,

The aluminium connection lugs 2 were then submitted to a pre-treating procedure before final plating with silver. The pre-treatment procedure comprised the following steps:
- Degreasing in a solution of a degreasing salt, pH 8,0, at 60°C for 4 minutes;
- Alkali etching with an alkali etchant, pH 10,0, at 60°C for 2 minutes;
- Rinsing with water;
- Acid etching at room temperature for 2 minutes, with a solution of H₂SO₄ and Acidal, pH 1,0.
- Rinsing with water;
- Fluoride etching at room temperature for 1 minute, with a solution of HNO₃ and ammonium difluoride, pH 1,0.
- Rinsing with water.

After this first etching procedure, a second etching procedure without the fluoride etching step was performed:
- Alkali etching with an alkali etchant, pH 10,0, at 60°C for 2 minutes;
- Rinsing with water_{;}
- Acid etching at room temperature for 1 minute, with a solution of H₂SO₄ and Acidal, pH 1,0.
- Rinsing with water.

Then the aluminium connection lugs 2 were double zincated at room temperature, for about 1 minute in a solution of NaOH with addition of zinc, pH 10,0. Intermediate steps of water rising followed by acid etching at room temperature, for 1 minute, with a solution of H₂SO₄ and Acidal, pH 1,0, were performed.

After final water rinsing, the aluminium connection lugs 2 were nickel plated with a solution of NiSO₄ and NiCl, pH 8,0, for 12 minutes, under the application of a current density of 1,0 A/dm², and water rinsed.

Before silver plating, the aluminium connection lugs 2 were pickled at room temperature with a solution of KCN, pH 10,0 for about 30 seconds.

Finally, the silver coating is electroplated on the surface of the aluminium connection lug using a solution of K[Ag(CN)₂] and KCN, pH 10,0, by application of a current density of 0,5 A/dm² for 15 minutes.

The thickness of the silver coating achieved is from 5 to 10 µm. In this way a resistant, strong adherent and conductive silver coating is obtained on the surface of the aluminium connection lug 2.

The protective ink was removed from the galvanic cells.

The silver plated aluminium connection lugs 2 had substantially increased corrosion resistance and low interfacial impedance.

### List of reference signs

- 1: Galvanic cell
- 2: Cell terminal connection lug
- 3: Seal
- 4: Adhesive tape

## Claims

1. A galvanic cell connection lug **characterized in that** it comprises a body made of aluminium or aluminium alloys and an electro-conductive metal coating on the surface of the body.

2. The connection lug according to claims 1, wherein the connection lug further comprises a zincate coating between the body and the electro-conductive metal coating.

3. The connection lug according to claims 1 to 2, wherein the connection lug further comprises a nickel coating between the zincate coating and the eletro-conductive metal coating.

4. The connection lug according to claims 1 to 3, wherein the electro-conductive metal coating is a silver coating, wherein the thickness of the silver coating is preferably from 5 to 10 µm.

5. A galvanic cell comprising a connection lug according to claims 1 to 4.

6. A battery comprising at least one galvanic cell according to claim 5.

7. A process for manufacturing a galvanic cell connection lug according to claims 1 to 4 **characterized in that** it comprises the following steps:
a) degreasing the surface of the connection lug;
b) alkaline etching the surface of the connection lug;
c) acid etching the surface of the connection lug;
d) fluoride etching the surface of the connection lug;
g) repeating steps b) and c) at least once;
h) forming a zincate coating on the surface of the connection lug;
i) electroplating a metal coating.

8. The process according to claim 7, wherein the degreasing step is performed in a bath of an alkali salt, at a temperature between 50-95°C, preferably between 55-75°C, and more preferably at 60°C, and pH between 7,5-8,5, preferably 8,0 for about 2 to 4 minutes.

9. The process according to claims 7 to 8, wherein the alkaline etching step is performed at a temperature between 50-70°, preferably at 60°C, and pH between 7,5-11,0, preferably at pH 10,0 for about 2 minutes.

10. The process according to claims 7 to 9, wherein the acid etching step is performed at pH < 5,5, preferably at pH 1,0, for about 1 to 2 minutes.

11. The process according to claims 7 to 10, wherein the fluoride etching step is performed in a solution comprising ammonium difluoride and nitric acid, pH 1,0.

12. The process according to claims 7 to 11, wherein the zincate coating step is performed twice with an intermediate acid etching step.

13. The process according to claims 7 to 12 further comprising a step of nickel plating between the steps h) and i), wherein the nickel plating step is preferably performed using an electric current density between 0,3 and 1,0 A/dm² for about 8 to 12 minutes.

14. The process according to claims 7 to 13, wherein the electroplated metallic coating is silver, wherein the silver electroplating is preferably performed using an electric current density between 0,2 A and 0,5 A/dm² for about 15 minutes.

15. The process according to claim 14, wherein the thickness of the electroplated silver coating is from 5 to 10 µm.
